# EUROPÄISCHE PATENTSCHRIFT

(11) **EP 1 640 827 B1**
(45) Veröffentlichungstag und Bekanntmachung des Hinweises auf die Patenterteilung: **05.11.2008**
(21) Anmeldenummer: 04023108.6
(22) Anmeldetag: 28.09.2004
(51) Int. Cl.: G05B 19/05

(54) **Verfahren und Vorrichtung zur Abbildung von Elementen eines in graphischer Programmiersprache vorliegenden Steuerungsprogramms in eine Abbildungsreihenfolge mittels eines Flutungsalgorithmus (Bereichswachstumsverfahren)**
Method and apparatus using a region growing algorithm for converting a control program depicted with elements of a graphical programming language
Méthode et dispositif utilisant le développement de domaine (region growing) pour traduire un programme de commande représenté graphiquement

(43) Veröffentlichungstag der Anmeldung: 29.03.2006
(73) Patentinhaber: SIEMENS AKTIENGESELLSCHAFT, 80333 München (DE)
(72) Erfinder: Opaterny, Thilo, 90453 Nürnberg (DE)

(56) Entgegenhaltungen:
- EP-A- 1 184 760
- US-A- 4 449 180
- US-A- 4 722 071
- US-A- 5 623 401

## Beschreibung

Die Erfindung betrifft ein Verfahren und ein System zur Abbildung von Elementen eines in graphischer Programmiersprache vorliegenden Steuerungsprogramms in eine Abbildungsreihenfolge, wobei das Steuerungsprogramm mindestens ein Netzwerk aufweist, welches Elemente aufweist, welche über Schnittstellen miteinander und/oder mit Operanden verbunden sind.

Aus der US Patentschrift US 5,623,401 ist ein Verfahren und eine Vorrichtung zum Betreiben eines industriellen Steuerungssystems bekannt. Demgemäss ist vorgesehen, ein Kontaktplan-Programm (relay ladder logic programm) in ein Flussdiagramm (flow type programm) zu überführen. Hierzu wird das Kontaktplan-Programm in eine effiziente Code-Struktur überführt.

Aus der DE 100 42 639 A1 ist bekannt, dass zur Steuerung und/oder Regelung eines technischen Prozesses mittels einer in einer graphischen Programmiersprache erzeugten Programmlogik eine Sensorik und/oder Aktorik des technischen Prozesses derart geführt wird, dass zur Abarbeitung sich wiederholender Prozesssequenzen Programmbausteine definierbar sind. Dabei hat ein Anwender die Möglichkeit, ein Automatisierungssystem mit der entsprechenden Sensorik und Aktorik über ein Anwenderprogramm anzusteuern. Die im Rahmen des Prozesses wiederkehrenden Teilaufgaben werden nach Möglichkeit innerhalb der Programmlogik in Form von Bausteinen angelegt. In graphischen Programmiersprachen bestehen diese Bausteine üblicherweise aus Netzwerken, die ihrerseits aus Operationen, die Operanden miteinander verknüpfen, bestehen. Die Netzwerke stellen beispielsweise logische Verknüpfungen dar. Die Bausteine sind über Schnittstellen miteinander verbunden.

Dies bedeutet, dass das Steuerungsprogramm in einer graphischen Programmiersprache vorliegt. Bei der Konvertierung in eine Abbildungsreihenfolge besteht jedoch das Problem, dass der Anwender in entscheidendem Masse durch seine Eingaben das Ergebnis, nämlich die Abbildungsreihenfolge beeinflusst.

Der Erfindung liegt die Aufgabe zugrunde, die Abbildungsreihenfolge von den Eingaben des Anwenders unabhängiger zu machen.

Diese Aufgabe wird durch ein Verfahren zur Abbildung von Elementen eines in graphischer Programmiersprache vorliegenden Steuerungsprogramms in eine Abbildungsreihenfolge gelöst, wobei das Steuerungsprogramm mindestens ein Netzwerk aufweist, welches Elemente aufweist, welche über Schnittstellen miteinander und/oder mit Operanden verbunden sind, welches Verfahren je Netzwerk eine Abbildbarkeitsprüfung sowie ein Umordnungsverfahren aufweist, wobei die Abbildbarkeitsprüfung für ein abbildbares Netzwerk durch einen Flutungsalgorithmus eine erste Abbildungsreihenfolge für die Elemente liefert und wobei das Umordnungsverfahren eine zweite optimierte Abbildungsreihenfolge liefert.

Diese Aufgabe wird durch ein System zur Abbildung von Elementen eines in graphischer Programmiersprache vorliegenden Steuerungsprogramms in eine Abbildungsreihenfolge gelöst, wobei das Steuerungsprogramm mindestens ein Netzwerk aufweist, welches Elemente aufweist, welche über Schnittstellen miteinander und/oder mit Operanden verbindbar sind, wobei das System erste Mittel zur Abbildbarkeitsprüfung sowie zweite Mittel zur Umordnung aufweist, wobei mit den ersten Mitteln ein Flutungsalgorithmus zur Generierung einer ersten Abbildungsreihenfolge für die Elemente ausführbar ist und wobei die zweiten Mittel zur Generierung einer zweiten optimierten Abbildungsreihenfolge vorgesehen sind.

Der Erfindung liegt die Erkenntnis zugrunde, dass ein Steuerungsprogramm, welches in einer graphischen Programmiersprache vorliegt, bei der Konvertierung in eine Abbildungsreihenfolge mit bisher bekannten Methoden häufig ineffizient abgebildet wird. Das zweistufige Verfahren gemäß der Erfindung stellt hingegen sicher, dass eine optimierte effiziente Abbildungsreihenfolge ermittelt wird. Erfindungsgemäß wird mit einem Flutungsalgorithmus eine erste Abbildungsreihenfolge generiert, welche durch ein Umordnungsverfahren in einem zweiten Schritt zu einer zweiten optimierten Abbildungsreihenfolge umgeordnet wird. Dabei kann die zweite Abbildungsreihenfolge identisch mit der ersten Abbildungsreihenfolge sein, z. B. dann, wenn bereits die durch den Flutungsalgorithmus bereitgestellte Abbildungsreihenfolge die bestmöglich erreichbare Abbildungsreihenfolge darstellt. Dies ist insbesondere bei einfachen Steuerungsprogrammen ohne Rückkopplungen der Fall.

Eine effektive automatische Umordnung der ersten Abbildungsreihenfolge in die zweite optimierte Abbildungsreihenfolge erreicht man gemäß einer vorteilhaften Ausgestaltung der Erfindung dadurch, dass beim Umordnungsverfahren in einem ersten Schritt eine Liste von Mengen erstellt wird mit einer ersten Menge, welche nur von Operanden abhängige Elemente enthält, mit einer zweiten Menge, welche von genau einem Element abhängige Elemente enthält und mit weiteren Mengen, welche von mehr als einem Element abhängige Elemente enthalten, und in einem zweiten Schritt Elemente der zweiten Menge, welche voneinander abhängig sind, als Kette verkettet werden und von einem Element der ersten Menge abhängende Ketten und Elemente der zweiten Menge mit diesem Element der ersten Menge verkettet als abgebildete Elemente aus der Liste entfernt werden und für folgende Schritte wie Operanden gewertet werden, wobei der erste und der zweite Schritt solange wiederholt werden, bis alle Mengen leere Mengen sind, wobei die abgebildeten verketteten Elemente die zweite Abbildungsreihenfolge bilden. Durch dieses gegebenenfalls mehrstufige Umordnungsverfahren wird sichergestellt, dass Elemente, welche direkt voneinander abhängig sind, in der zweiten optimierten Abbildungsreihenfolge direkt aufeinander folgen. Dies führt zu einem straffer strukturierten Steuerungsprogramm, welches weniger Speicherplatz benötigt und schneller abläuft.

Ergibt die Abbildbarkeitsprüfung, dass ein Netzwerk nicht abbildbar ist, so erfolgt gemäß einer vorteilhaften Ausgestaltung eine Rückmeldung an einen Anwender. Der Anwender kann daraufhin das in graphischer Programmiersprache vorliegende Steuerungsprogramm derart verändern, dass das jeweilige Netzwerk abbildbar wird, insbesondere mit Informationen, die dem Anwender durch die Rückmeldung gegeben werden.

Gemäß einer weiteren vorteilhaften Ausgestaltung der Erfindung prüft die Abbildbarkeitsprüfung, ob Elemente und Operanden abbildbar und bestimmt sind.

Um Eingabefehler zu vermeiden bzw. aufzudecken, prüft die Abbildbarkeitsprüfung gemäß einer weiteren vorteilhaften Ausgestaltung der Erfindung, ob kompatible Schnittstellen bzw. Operanden miteinander verbunden sind.

Gemäß einer weiteren vorteilhaften Ausgestaltung der Erfindung prüft die Abbildbarkeitsprüfung, ob ein Netzwerk ungewiss ist. Dabei wird bei einer weiteren vorteilhaften Ausgestaltung der Erfindung bei einem ungewissen Netzwerk im Umordnungsverfahren die Reihenfolge der Elemente, welche einen Operanden gemeinsam verwenden, in der Abbildungsreihenfolge nicht verändert.

Um Elemente, welche einen Operanden mehrfach verwenden, besser abbilden zu können, wird gemäß einer weiteren vorteilhaften Ausgestaltung der Erfindung vorgeschlagen, dass solche Elemente in mehreren Schritten abgebildet werden.

Um das Verfahren auch bei ungewissen Netzwerken zur Optimierung der Abbildungsreihenfolge einsetzen zu können, wird gemäß einer weiteren vorteilhaften Ausgestaltung der Erfindung vorgeschlagen, dass bei einem ungewissen Netzwerk die Abbildungsreihenfolge zumindest teilweise durch einen Anwender vorgebbar ist.

Das Steuerungsprogramm kann in eine speicherprogrammierbare Steuerung implementiert werden, wenn gemäß einer weiteren vorteilhaften Ausgestaltung der Erfindung die Elemente gemäß der zweiten Abbildungsreihenfolge in maschinennahe Befehle abgebildet werden.

Nachfolgend wird die Erfindung anhand der in den Figuren dargestellten Ausführungsbeispiele näher beschrieben und erläutert.

Es zeigen:
- FIG 1: ein System zur Abbildung von Elementen eines in graphischer Programmiersprache vorliegenden Steuerungsprogramms in eine Abbildungsreihenfolge,
- FIG 2: ein Steuerungsprogramm in Kontaktplandarstellung,
- FIG 3: das Steuerungsprogramm in Funktionsbausteindarstellung,
- FIG 4: ein Netzwerk in Kontaktplandarstellung,
- FIG 5: das Netzwerk in erweiterter graphischer Darstellung,
- FIG 6: ein ungewisses Netzwerk,
- FIG 7: das Steuerungsprogramm von FIG 2 bzw. FIG 3 in erweiterter graphischer Darstellung,
- FIG 8: ein weiteres Netzwerk und
- FIG 9: ein weiteres ungewisses Netzwerk.

Die Erfindung wird anhand mehrerer Ausführungsbeispiele insbesondere aus der industriellen Automatisierungstechnik erläutert. Die Norm IEC 1131 beschreibt verschiedene Programmiersprachen für die Programmierung von speicherprogrammierbaren Steuerungen (SPS). Eine der dort genannten graphischen Programmiersprachen ist die Funktionsbausteinsprache (FBS), eine andere graphische Programmiersprache ist der Kontaktplan (KOP). In KOP programmiert man mit Kontakten und Spulen. Alle nicht boolschen Verknüpfungen werden mit Kästen dargestellt. In FBS werden auch die boolschen Verknüpfungen mit Kästen dargestellt. Bis auf die boolschen Verknüpfungen besteht zwischen FBS und KOP kaum ein Unterschied.

Die Norm erklärt die Semantik der einzelnen Sprachelemente. Die Norm erklärt jedoch nicht die Abbildung der graphischen Sprachen auf den in der SPS vorhandenen Mikrocontroller. Während die Abbildung von Textsprachen wie Structured-Text (SCL/ST) oder Anweisungsliste (IL/AWL) nahe liegend ist - jedes sprachliche Konstrukt wird auf mehrere Mikrocontrollerbefehle abgebildet - ist die Abbildung von graphischen Programmiersprachen nicht so trivial, da es Abhängigkeiten und versteckte Rückkopplungen geben kann.

Das hier vorgeschlagene Verfahren ermöglicht eine effiziente Abbildung von graphischen Programmiersprachen (z. B. KOP und FBS) auf einen virtuellen Mikrocontroller. Dabei muss kein realer Controller wie ein ARM, MIPS oder INTEL Prozessor im Vordergrund stehen, es könnte auch eine mit AWL programmierbare SPS als Zielmaschine dienen.

Im Folgenden werden die hier verwendeten Begriffe erläutert.

Operanden adressieren ein Stück Speicher, z. B. Speicher der SPS. Das können verschiedene Speicher sein, z. B. Register, Datenspeicher, Stack, Ein-/Ausgänge bzw. deren Speicherabbild usw. Operanden dienen als Informationsquellen oder Informationssenken.

Das Betriebssystem der SPS bildet die physikalischen Eingänge, an welche Taster, induktive Signalgeber, Lichtschranken usw. angeschlossen sind, auf einen durch das Programm adressierbaren Speicher ab. Ein anderer Speicherbereich wird vom Betriebssystem der SPS auf die physikalischen Ausgänge abgebildet, an die Lampen, Relais, Schütze, Motoren oder sonstige Aktoren mehr oder weniger direkt angeschlossen sind. Diese Ein- und Ausgänge bekommen üblicherweise symbolische Namen, so dass man im Programm statt E5.0 "Endschalter links" schreiben kann.

Das vom Anwender zu erstellende Programm kann in Bausteine unterteilt werden. Bausteine entsprechen den Funktionen, Prozeduren, Methoden anderer Programmiersprachen. Ein Baustein ist das kleinste einzeln auf der SPS zu hantierende Programmstück.

Ein Baustein hat eine Schnittstelle. Durch die Schnittstelle werden die lokalen Operanden des Bausteins definiert. Diese sind nur innerhalb des Bausteins gültig. Im Gegensatz dazu sind globale Operanden und Konstanten in allen Bausteinen gültig. Bausteine können als Bauteile verwendet werden. Durch die Schnittstelle des Bausteins sind seine Anschlüsse definiert. Insofern sind die Schnittstellen der Bausteine auch für die hier betrachtete Abbildung von Interesse.

Ein Baustein besteht aus mehreren Netzwerken. Es ist möglich für jedes Netzwerk eine andere Programmiersprache zu verwenden. Sprünge sind nur innerhalb des Bausteins erlaubt. Die Verwaltung und Auflösung von Sprüngen liegt in der Obhut der Abbildung des gesamten Bausteins. Hier soll nur die Abbildung der einzelnen KOP- oder FBS-Netze betrachtet werden.

Die Funktionsbibliothek enthält alle vordefinierten Funktionen und ihre Abbildung auf die Zielsprache der SPS. Da viele Abbildungen sich nur durch einen Opcode unterscheiden, werden die Funktionen zu Familien zusammengefasst. Z. B. enthält die Familie der binären Funktionen alle Funktionen mit zwei Eingängen und einem Ausgang. Darunter fallen Addition, Subtraktion, Multiplikation, Schieben und Rotieren, bis hin zu Minimum und Maximum.

Die Anschlüsse sind an den Seiten der Kästen angeordnet. Die Anschlüsse sind bezeichnet, um sie voneinander zu unterscheiden. Die Eingänge sind auf der linken Seite des Kasten angeschlossen, die Ausgänge sind auf der rechten Seite des Kasten angeschlossen. Eine Funktion kann beliebig viele Ein- und Ausgänge haben. Dies gilt auch für Bausteine, die wie Bauteile verwendet werden können.

Ein Bauteil ist die Verwendung einer Funktion - in einem Netzwerk kann eine Funktion mehrfach vorkommen. Kontakte und Spulen sind Funktionen, die nicht durch Kästen sondern durch spezielle Symbole dargestellt werden. Bauteile werden hier auch als Elemente bezeichnet.

Im Gegensatz zum Anschluss einer Funktion steht die Verbindung eines Bauteils. Die Kontakte, Spulen und Kästen sind durch Linien miteinander verbunden - verdrahtet. Durch die Linien wird in FBS der Informationsfluss - in KOP der Stromfluss - dargestellt. Ein Draht verbindet eine Informationsquelle mit mehreren Informationssenken. In KOP wird ein ODER-Gatter durch eine Parallelschaltung dargestellt. Das widerspricht dem gerade gesagten nicht, der senkrechte Strich ist eigentlich ein Bauteil. Auch in KOP gilt somit: Ein Draht verbindet eine Informationsquelle mit mehreren Informationssenken.

Alle Bauteile, die miteinander verdrahtet sind, bilden ein Netzwerk. Ein Netzwerk kann als Sprungziel dienen. Es ist nicht erlaubt in ein Netzwerk hinein zu springen. Ein Netzwerk kann einzeln abgebildet werden.

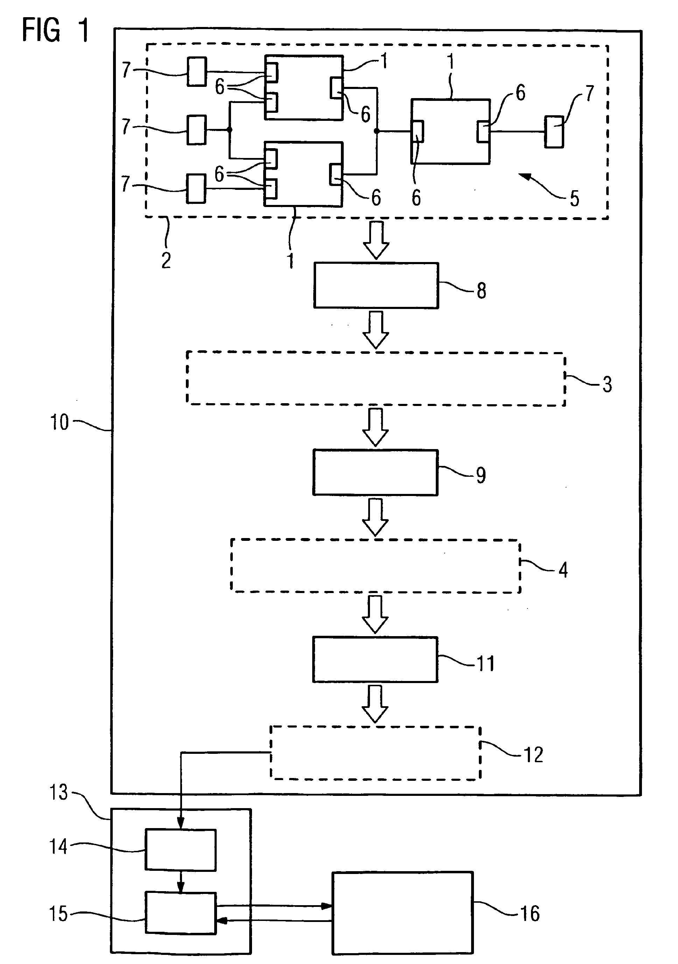

FIG 1 zeigt ein System zur Abbildung von Elementen 1 eines in graphischer Programmiersprache vorliegenden Steuerungsprogramms 2 in eine Abbildungsreihenfolge. Das Steuerungsprogramm 2 weist ein Netzwerk 5 auf, welches Elemente 1 aufweist, welche über ihre Schnittstellen 6 teilweise miteinander, teilweise mit Operanden 7 verbunden sind. Mit ersten Mitteln 8 zur Abbildbarkeitsprüfung wird mittels eines Flutungsalgorithmus aus dem in graphischer Programmiersprache vorliegenden Steuerungsprogramm 2 eine erste Abbildungsreihenfolge 3 generiert. Aus der ersten Abbildungsreihenfolge 3 wird mit zweiten Mitteln 9 eine zweite optimierte Abbildungsreihenfolge 4 generiert. Die Elemente gemäß der zweiten Abbildungsreihenfolge 4 werden mit Umwandlungsmitteln 11 in maschinennahe Befehle 12 abgebildet. Die maschinennahen Befehle 12 sind in den Speicher 14 einer speicherprogrammierbaren Steuerung 13 ladbar. Sie bilden ein in Rechenmitteln 15 der speicherprogrammierbaren Steuerung 13 ablauffähiges Steuerungsprogramm zur Steuerung und/oder Regelung eines technischen Prozesses oder einer technischen Anlage 16. Die Generierung der Abbildungsreihenfolgen 3, 4 sowie der maschinennahen Befehle 12 aus dem Steuerungsprogramm 2 erfolgt gemäß Ausführungsbeispiel innerhalb eines Engineeringsystems 10.

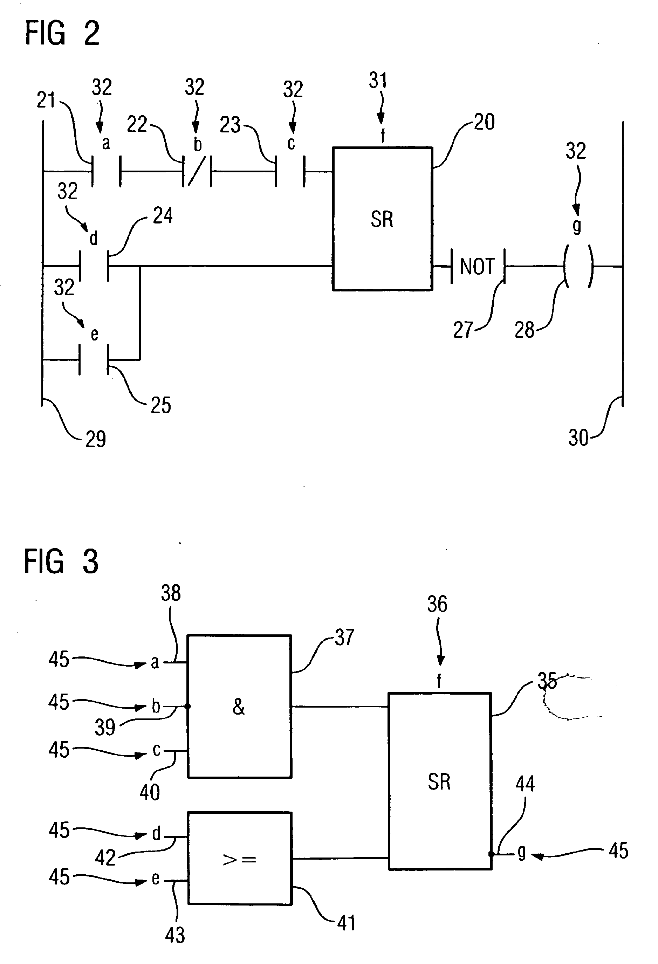

FIG 2 zeigt ein Steuerungsprogramm in Kontaktplandarstellung (KOP). Dargestellt ist ein SR-Flipflop (SR = Setzen Rücksetzen), auch Auffang- oder Speicher-Flipflop genannt. Einfache logische Funktionen wie UND werden durch eine Reihenschaltung von Kontakten 21, 22, 23 bzw. ein ODER durch eine Parallelschaltung von Kontakten 24, 25 dargestellt. Wichtigstes Bauteil eines Kontaktplanes ist der Kontakt 21 - 25. Die Kontakte dienen zur Abfrage von boolschen Operanden 32 ("a" - "e") . Es wird zwischen Schließern 21, 23, 24, 25 und Öffnern 22 unterschieden. Durch einen Öffner 22 wird die Negation eines Operanden realisiert. Zweitwichtigstes Bauteil ist die (Relais-)Spule 28, welche der Zuweisung eines Verknüpfungsergebnisses an einen boolschen Operanden 32 ("g") dient. Links und rechts wird das Netzwerk durch Stromschienen 29, 30 begrenzt. Andere Bauteile werden durch einen Kasten dargestellt. Im Kasten steht der Name der Funktion, die durch dieses Bauteil realisiert wird, z. B. eine Multiplikation, eine Addition oder wie im Ausführungsbeispiel gemäß FIG 2, ein SR-Flipflop. Da ein Flipflop ein speicherndes Bauteil ist, ist ein Operand 31 ("f") angegeben. Negierte Eingänge werden in Kontaktplandarstellung als durchgestrichene Kontakte 22 dargestellt.

Soll ein Ausgang negiert werden, so muss in Kontaktplandarstellung ein spezielles Element 27 (NOT) eingefügt werden.

FIG 3 zeigt das Steuerungsprogramm gemäß FIG 2 in Funktionsbausteinsprache (FBS oder FUP abgekürzt). Die Reihenschaltung der Kontakte 21 - 23 gemäß FIG 2 wird hier durch ein UND-Gatter 37 mit den Eingängen 38 - 40 realisiert, die Parallelschaltung der Kontakte 24, 25 durch ein ODER-Gatter 41 mit den Eingängen 42, 43. Das SR-Flipflop 35 weist wiederum einen Operanden 36 ("f") auf. Negierte Eingänge 39 werden in Funktionsplandarstellung als Kringel dargestellt, ebenso negierte Ausgänge 44. Die an den Eingängen 38 - 40, 42, 43 anliegenden Operanden "a" - "e" bzw. der am Ausgang 44 ausgegebene Operand "g" sind mit dem Bezugszeichen 45 gekennzeichnet.

Das gemäß FIG 2 und FIG 3 in graphischer Programmiersprache (KOP bzw. FBS) vorliegende Steuerungsprogramm lässt sich in textueller Programmiersprache durch folgende Anweisungsliste (AWL) darstellen:

| | |
|---|---|
| LD | a |
| AN | b |
| A | c |
| S | f |
| LD | d |
| O | e |
| R | f |
| LD | f |
| STN | g |

Bei der Anweisungsliste geht man von einer virtuellen Maschine aus, die einen oder mehrere Stapel hat, welche für die Speicherung der Zwischenergebnisse verwendet werden. Der LD-Befehl holt einen Operanden und legt ihn auf dem Stapel ab. A, O, AN, ON verknüpfen den Operanden mit dem obersten Element des Stapels und legen das Ergebnis wiederum auf dem Stapel ab. Dabei werden die entsprechenden boolschen Funktionen UND, ODER, NICHT ausgeführt. ST speichert das oberste Element im angegebenen Operanden. S setzt ihn, wenn das oberste Element wahr ist, R setzt ihn zurück, wenn das oberste Element wahr ist. Je nach Hersteller gibt es unterschiedliche Implementierungen für den oder die Stapel. Teilweise sind getrennte Stapel für boolsche Operationen und für Wortoperationen vorgesehen, teilweise werden beide Operationen auf einem Stapel abgelegt. Dies spielt jedoch für vorliegende Erfindung keine Rolle. Die einzelnen Anweisungen der Anweisungsliste lassen sich durch Mikrocontrollerbefehle realisieren, welche dann die vom Anwender programmierte Funktion erfüllen.

Die Anweisungsliste lässt sich in genau der Reihenfolge abbilden, in der sie niedergeschrieben ist. Bei Steuerungsprogrammen, welche in graphischer Programmiersprache vorliegen, ist dies nicht so einfach möglich. Bei der graphischen Programmierung zeichnet der Anwender üblicherweise ein Netzwerk mittels eines Editors. Er hat die Möglichkeit, einzelne Elemente aus einer Bibliothek auszuwählen, zu platzieren, zu beschriften und zu verbinden. Dabei werden dem Anwender üblicherweise keine Vorgaben über die Reihenfolge der einzelnen Schritte gemacht. Der Editor gibt schließlich eine Repräsentation der graphischen Information an den Compiler weiter. Diese Repräsentation der graphischen Information enthält jedoch keine Abbildungsreihenfolge.

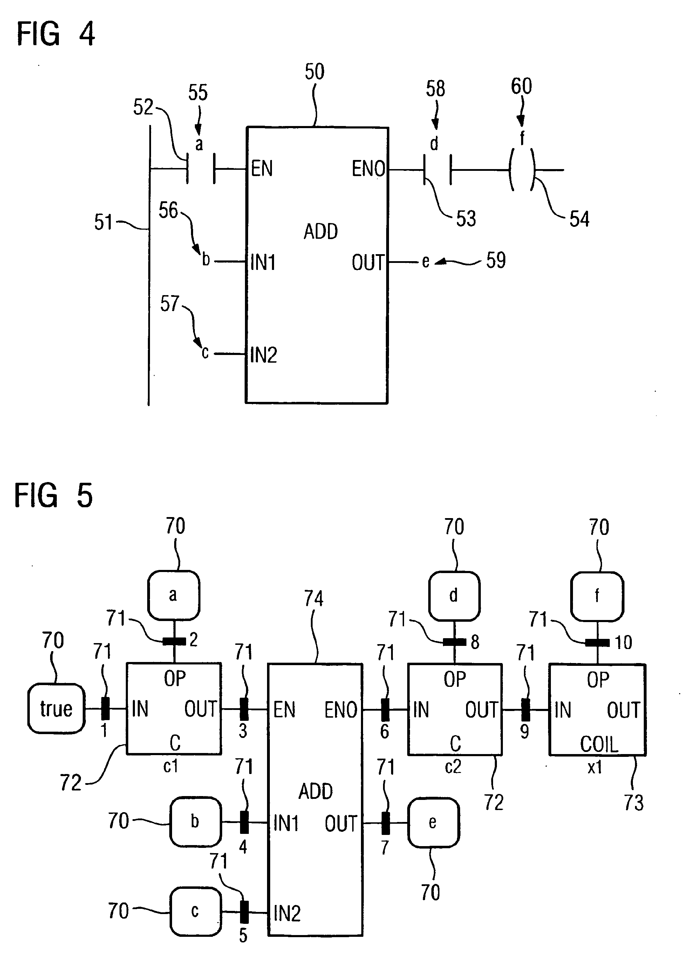

FIG 4 zeigt ein weiteres Netzwerk in Kontaktplandarstellung. Die Darstellung zeigt einen Addierer 50. In dieser Darstellung ist folgende Information enthalten: Es gibt sechs Operanden 55 - 60, vier Bauteile 50, 52, 53, 54, zehn Verbindungen und für die Stromschiene 51 eine Konstante. Eine Verbindung wird im Folgenden auch als Draht bezeichnet. Die Operanden 55 - 60 haben Bezeichner ("a" - "f") . Die Bauteile 50, 52, 53, 54 und Verbindungen müssen vom System bezeichnet werden, damit sie referenzierbar sind. Die Bezeichner der Bauteile und Verbindungen sind für den Anwender nur von geringem Nutzen, da dieser üblicherweise mit einer Maus oder einem anderen graphischen Eingabegerät selektiert. Die Datenhaltung, also die Repräsentation der graphischen Information, für das in FIG 4 dargestellte Netzwerk könnte folgendermaßen aussehen:
op true const bool
op a global bool
op b global int
op c global int
op d global bool
op e global int
op f global bool

block FC100

net add
part c1 contact
part c2 contact
part add1 add int
part x1 coil

wire 1
con true
con c1 in1
wire 2
con a
con c1 operand
wire 3
con c1 out
con add1 in
wire 4
con b
con add1 in1
wire 5
con c
con add1 in2
wire 6
con add1 eno
con c2 in
wire 7
con add1 out
con e
wire 8
con d
con c2 operand
wire 9
con c2 out
con x1 in
wire 10
con x1 op
con f

Zum Beispiel verbindet "wire 4" den Operanden "b" mit dem Eingang "in1" des Integer-Addierers "add1". Der "wire 8" verbindet den Operanden "d" mit dem Operandeneingang des Kontaktes 53 ("c2"). Mittels dieser Bezeichner ergibt sich für das Netzwerk gemäß FIG 4 die erweiterte graphische Darstellung gemäß FIG 5. Bei der Darstellung gemäß FIG 5 werden die Operanden 70 durch Kästen mit abgerundeten Ecken dargestellt. Die Drähte 71 erhalten Nummern. Die Bauteile 72, 73, 74 erhalten einen Bezeichner. In den Bauteilen finden sich die Bezeichner der jeweiligen Anschlüsse. Die Kontakte 72 und die Spule 73 haben jeweils drei Anschlüsse. Somit lassen sich auch Spulen 73 weiterverschalten. Der Graph gemäß FIG 5 stellt nun den Ausgangspunkt für das vorgeschlagene effiziente Verfahren zur Abbildung von Elementen eines in graphischer Programmiersprache vorliegenden Steuerungsprogramms in eine Abbildungsreihenfolge dar.

Die Abbildung erfolgt für jedes Netzwerk einzeln und in mehreren Stufen. Dabei wird zuerst die Abbildbarkeit geprüft, wobei insbesondere auf Rückkopplungen und Typverträglichkeit geachtet wird. Bei der Prüfung der Abbildbarkeit fällt eine Abbildungsreihenfolge der einzelnen Elemente des Netzwerkes an. Ist die Abbildbarkeit sichergestellt, können verschiedenste Optimierungen durchgeführt werden. Schließlich wird eine Abbildung auf einen Zwischencode vorgenommen.

Eine Verdrahtungsprüfung kontrolliert, ob kompatible Verbindungen bzw. Operanden miteinander verdrahtet wurden. Die Verdrahtungsprüfung kann als eigenständiger Schritt oder innerhalb der Abbildbarkeitsprüfung realisiert werden. Ersteres erlaubt es dem Editor schon bei der Eingabe durch den Anwender, unzulässige Verdrahtungen abzuwehren und vermeidet somit unsinnige Netzwerke. Letzteres verhindert unsinnige Netzwerke. Die durch einen Draht verbundenen Anschlüsse und Operanden müssen von kompatiblem Typ sein. So ergibt es beispielsweise keinen Sinn, den boolschen Ausgang eines UND-Gatters mit dem ersten Operanden einer Integer-Addition zu verbinden, weil beide Typen unverträglich sind. Ebenso ergibt es wenig Sinn, wenn an einen Draht nur Eingänge von Bauteilen angeschlossen sind. Bei der Verdrahtungsprüfung werden zwei Untersuchungen durchgeführt: Typverträglichkeit und Informationsflussrichtung. Die Typverträglichkeitsprüfung kann in unterschiedlichen Ausprägungen realisiert werden. Bei einer weniger strengen Überprüfung wird nur die Bitbreite der Typen betrachtet. Haben beide Typen gleiche Bitbreite, so wird die Verbindung als zulässig betrachtet (z.B. Typen "int" mit "word"). Bei einer strengeren Überprüfung müssen die Typen gleich sein. Dies verhindert zuverlässig Missinterpretationen, hat aber für den Anwender z. B. den Nachteil, dass er den gleichen Operanden nicht für eine Addition und ein Shift verwenden kann.

Die Informationsflussrichtung von Operanden wird bei der Deklaration des Operanden angegeben. Globale Operanden gelten in allen Bausteinen. Lokale Operanden gelten nur innerhalb des Bausteins. Da Sprünge nur innerhalb eines Bausteins stattfinden dürfen, zählen sie zu den lokalen Operanden. Ob ein Operand als Informationsquelle oder Informationssenke dienen kann, hängt von der Sektion ab, in der er definiert wurde.

Selbst wenn die Verdrahtungsprüfung keinen Fehler im Netzwerk findet, ist nicht jedes durch die Datenhaltung realisierbare Netzwerk auch abbildbar. Die Abbildungsreihenfolge der einzelnen Elemente darf keinen Einfluss auf die Semantik des Netzwerkes haben. Hat die Abbildungsreihenfolge einen Einfluss, so wird das Netzwerk ungewiss genannt. Folgendes Beispiel soll verdeutlichen, was mit semantischem Unterschied aufgrund der Abbildungsreihenfolge gemeint ist.

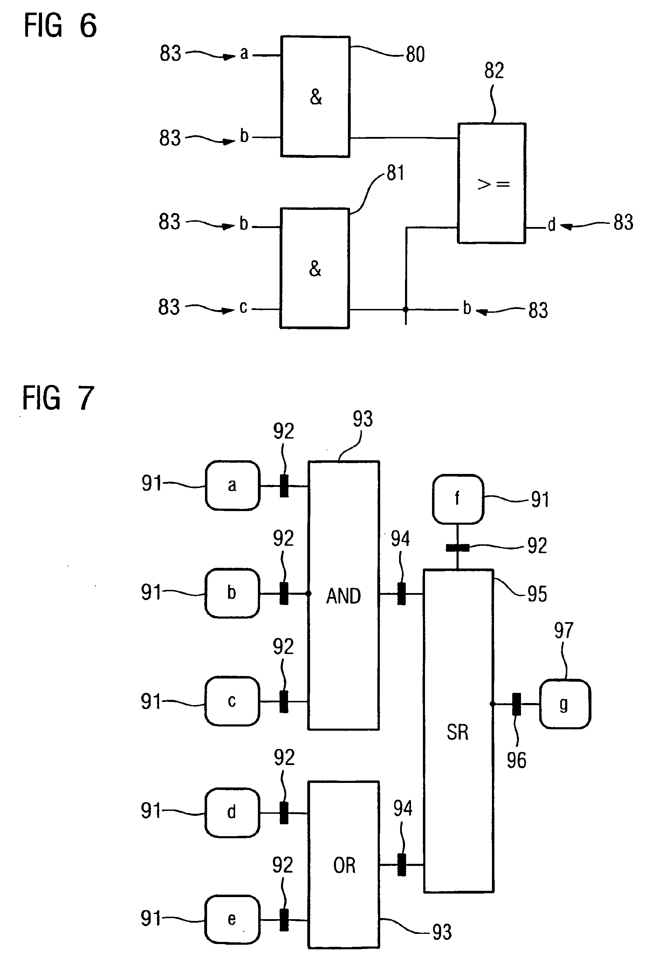

FIG 6 zeigt ein Netzwerk, welches zwei UND-Gatter 80, 81 (AND) und ein ODER-Gatter 82 (OR) aufweist. Die Operanden 83 tragen Bezeichner ("a" - "d"). Wie im Folgenden gezeigt ist es ein ungewisses Netzwerk. Vor der Berechnung des Netzwerks seien a = 1, b = 1 und c = 0. Je nach Abbildungsreihenfolge der Elemente 80, 81, 82 ergibt sich ein unterschiedliches Ergebnis für den Operand "d". Es ist unerwünscht, dass der Operand "d" in einem Fall gleich 1 und im anderen Fall gleich 0 ist:

| Sequenz | Berechnung | Ergebnis |
|---|---|---|
| a1 | x : = a AND b | 1 and 1 = 1 |
| a2 | b : = b AND c | 1 and 0 = 0 |
| o1 | d : = x OR b | 1 or 0 = 1 |
| a2 | b : = b AND c | 1 and 0 = 0 |
| a1 | x : = a AND b | 1 and 0 = 0 |
| o1 | d : = x OR b | 0 or 0 = 0 |

Allgemein ist ein Netzwerk ungewiss, wenn bei gleicher Eingabe für unterschiedliche Abbildungsreihenfolgen unterschiedliche Ausgaben entstehen. Werden Operanden entweder nur lesend oder nur schreibend verwendet, dann spielt die Abbildungsreihenfolge der Bauteile keine Rolle für die Ausgänge. Ein Netzwerk ist jedoch ungewiss, wenn ein Operand sowohl lesend als auch schreibend verwendet wird. Diese Situation wird auch implizite Rückkopplung genannt (siehe IEC 1131). Ein Netzwerk ist auch dann ungewiss, wenn ein Operand mehrfach beschrieben wird. Elektrisch entspricht dies einem Kurzschluss und sollte nicht erlaubt sein. Bei einer Abbildung auf eine sequentiell abgearbeitete Sprache ist dies jedoch kein Problem. Es sind jedoch die durch die Ausführungsreihenfolge entstehenden Effekte zu berücksichtigen. Wenn das Netzwerk ungewiss ist, dann kann der Anwender die Abbildungsreihenfolge beeinflussen. Im Allgemeinen ist es dem Anwender jedoch nicht möglich, die Abbildungsreihenfolge festzulegen. Andernfalls könnte ein Anwender z. B. fordern, dass bei einem Netzwerk gemäß FIG 6 das ODER-Gatter vor dem ersten UND-Gatter abgebildet wird. Das ist jedoch nicht möglich, weil zur Berechnung des ODER-Gatters das Ergebnis des ersten UND-Gatters benötigt wird. Die Reihenfolge, in der die Bauteile abgebildet werden, wird durch die Reihenfolge, in der die Bauteile in der Datenhaltung enthalten sind, beeinflusst.

Rückkopplungen sind gemäß der Norm IEC 1131 nicht ausgeschlossen. So ist es gemäß Norm erlaubt, dass ein Ausgang einer Funktion direkt oder indirekt über andere Funktionen wieder auf einen Eingang dieser Funktion geführt wird. Rückkopplungen sind abbildbar, wenn das Ergebnis der Funktion gespeichert wird und im nächsten Berechnungszyklus wieder zur Verfügung steht. Dazu muss an den Draht ein globaler Operand oder ein Operand aus dem statischen Bereich oder den Einausgängen des Bausteins angeschlossen sein. Dieser Operand wird zur Abbildung des Drahtes verwendet.

Die Abbildbarkeit wird durch einen Flutungsalgorithmus ermittelt. Als Ergebnis erhält man eine Abbildungsreihenfolge. Ein Flutungsalgorithmus ist dadurch gekennzeichnet, dass die Knoten und Kanten entlang untersuchter Pfade markiert werden. Flutungsalgorithmen sind z. B. die Algorithmen von Dijkstra, Prim oder Kruskal. Ein solcher Algorithmus wird Flutungsalgorithmus genannt, weil sich die Markierung entlang der Kanten über die Knoten des Graphen bewegt, wie Wasser in einem Rohrsystem, wobei die Kanten die Rohre und die Knoten die Verteiler zwischen den Rohren darstellen. Im vorliegenden Fall werden die Elemente (= Knoten) und Drähte (= Kanten) in einem iterativen Prozess als "bestimmt" bzw. "abbildbar" markiert, d. h. in eine entsprechende Liste eingetragen. Die Anwendung des Flutungsalgorithmus ist weiter unten beispielhaft anhand FIG 7 beschrieben.

Folgende Regeln bilden den Ausgangspunkt der Flutung:
- Alle Operanden gelten als abbildbar, da sie direkt als Operand im Opcode verwendet werden können.
- Alle globalen Operanden aus den Gültigkeitsbereichen "const", "global" gelten als vorbestimmt, da sie immer einen Wert haben.
- Alle lokalen Operanden mit dem Gültigkeitsbereich "in", "inout" und "stat" gelten als vorbestimmt, da ihnen zu Beginn des Bausteinaufrufs ein Wert zugewiesen wird.
- Alle lokalen Operanden mit dem Gültigkeitsbereich "out" oder "temp" gelten vorerst als unbestimmt.
- Ein Draht gilt als vorbestimmt, wenn er mit einem vorbestimmten Operanden verbunden ist. Dadurch werden implizite Rückkopplungen abbildbar.
- Alle Bauteile gelten vorerst als unbestimmt und nicht abbildbar.

Für Operanden muss zwischen Abbildbarkeit und Bestimmtheit unterschieden werden, da in temporäre Operanden erst ein Wert geschrieben werden muss, bevor sie gelesen werden können. Für die Anschlüsse von Bauteilen ist Abbildbarkeit und Bestimmtheit synonym.

Folgende Regeln sorgen für die Ausbreitung der Abbildbarkeit und der Bestimmtheit im Graphen:
- Ein Draht gilt als bestimmt und abbildbar, wenn seine Informationsquelle, die erste Verbindung, bestimmt ist.
- Wenn ein Draht abbildbar ist, dann sind alle Verbindungen des Drahtes abbildbar und bestimmt.
- Ein Eingang eines Bauteils gilt als abbildbar und bestimmt, wenn er an einen abbildbaren Draht angeschlossen ist oder wenn er optional ist.
- Ein Bauteil gilt als abbildbar, wenn alle Eingänge bestimmt sind.
- Wenn ein Bauteil abbildbar ist, dann sind alle Ausgänge abbildbar und bestimmt.
- Ein Operand gilt als bestimmt, wenn er mit einem abbildbaren Draht verbunden ist.

Der Flutungsalgorithmus überprüft zuerst für alle Drähte und dann für alle Bauteile diese Regeln. Wenn sich die Abbildbarkeit eines Bauteils ergibt, so wird das Bauteil in einer Liste notiert. Diese Liste ist eine mögliche Abbildungsreihenfolge bei der Codegenerierung. Wenn an einem Draht nur Operanden angeschlossen sind, so wird dieser Draht ebenfalls als Bauteil behandelt und in die Liste eingetragen. Alle anderen Drähte werden nicht in die Liste eingetragen. Wenn sich für ein Objekt die Abbildbarkeit ergeben hat, so werden diese Regeln wieder zuerst für alle noch nicht abbildbaren Drähte und dann für alle noch nicht abbildbaren Bauteile überprüft. Dies wird so lange wiederholt, bis sich keine neue Abbildbarkeit mehr ergibt. Nun kann überprüft werden, ob alle Drähte und Bauteile abbildbar sind. Sind Drähte oder Bauteile nicht abbildbar, so kann das Netzwerk nicht abgebildet werden.

Der Flutungsalgorithmus wird anhand des Ausführungsbeispiels gemäß FIG 7 näher erläutert. FIG 7 zeigt das Steuerungsprogramm gemäß FIG 2 und FIG 3 in erweiterter graphischer Darstellung. Im ersten Schritt des Flutungsalgorithmus zur Prüfung der Bestimmtheit der Elemente des Netzwerks gelten alle Eingänge und alle Einausgänge als bestimmt, in FIG 7 also die Elemente mit dem Bezugszeichen 91. Damit ergibt sich im zweiten Schritt des Flutungsalgorithmus, dass alle an diese Operanden angeschlossenen Drähte 92 abbildbar und bestimmt sind.

Nun können im dritten Schritt die Elemente 93, also das UND-Gatter und das ODER-Gatter, abgebildet werden. Im vierten Schritt sind die Drähte 94, die an den Ausgängen angeschlossen sind, bestimmt und abbildbar. Somit sind alle Eingänge des Flipflop 95 bestimmt und dieses kann im fünften Schritt als abbildbar gelten. Der sechste Schritt bringt die Abbildbarkeit des am Flipflop-Ausgang angeschlossenen Drahtes 96 und der siebte Schritt letztlich die Bestimmtheit des Ausgangsoperanden 97.

Bei der Flutung entstand somit eine Abbildungsreihenfolge. Im dritten Schritt wurden das UND-Gatter (AND) und das ODER-Gatter (OR) abbildbar. Die Abbildungsreihenfolge für das UND-Gatter und das ODER-Gatter ist somit beliebig. Im fünften Schritt wurde das Flipflop abbildbar. Das Flipflop kann somit erst nach der Abbildung des UND-Gatters und des ODER-Gatters abgebildet werden. Die Abbildungsreihenfolge kann damit in eine Liste aus Mengen abgebildet werden. Für das Ausführungsbeispiel ergibt sich folgende Abbildungsreihenfolge:
[{AND, OR} , {SR}] .

Die Codegenerierung wird durch die Anschlüsse der Funktionen realisiert. Die Funktionsbibliothek kann für jeden Anschluss einer Funktion mehrere Abbildungen enthalten - für jedes Zielsystem eine. Die bei der Abbildbarkeitsprüfung gewonnene Liste von Mengen von Bauteilen wird in eine Liste von Verbindungen, Generierliste genannt, überführt. Eine Verbindung ist der Anschluss eines Bauteils. Da ein Bauteil seine Funktion kennt, kennt die Verbindung auch ihren Anschluss.

Im einfachsten Fall - ohne Optimierungen - wird das erste Bauteil aus der ersten Menge in der Reihenfolge der Anschlüsse des Bauteils, welche in der Bibliothek vorgegeben ist, abgearbeitet. Dann folgen die Anschlüsse des nächsten Bauteils aus der Menge, bis die erste Menge erledigt ist. Nun wird mit der nächsten Menge genauso verfahren. Für das Beispiel aus FIG 7 ergibt sich: [{AND, OR}, {SR}] wird zu {AND.in1, AND.in2, AND.in3, AND.out, OR.in1, OR.in2, OR.out, SR.operand, SR.in1, SR.in2, SR.q} . Der verwendete einfache Algorithmus ist der Grund für die unten wiedergegebene wenig optimale Abbildung. Andererseits ist der Algorithmus immer durchführbar und erzeugt eine Abbildung, welche die Semantik des Netzwerks erhält. Bei anderen Optimierungen muss sehr genau darauf geachtet werden, die Semantik nicht zu zerstören.

Im Allgemeinen wird ein Draht durch einen Operanden abgebildet. Daraus folgt, dass jeder Draht einen Operanden benötigt. Ist ein Draht mit einem Operanden verbunden, so kann dieser verwendet werden. Sind an einem Draht nur Bauteilanschlüsse, so muss ein temporärer Operand verwendet werden. Als temporäre Operanden dienen Operanden aus dem Lokaldatenstack. Sie werden nur innerhalb des jeweiligen Netzwerks benötigt. Das nächste Netzwerk kann sie somit wieder verwenden. Ist ein Draht mit mehreren Operanden verbunden, so muss der Anwender spezifizieren können, welcher Operand zur Abbildung verwendet wird. Insbesonders, wenn einer dieser Operanden an einer Rückkopplung beteiligt ist.

Nun kann die bei der Abbildbarkeitsprüfung gefundene Reihenfolge verwendet werden. Dies führt zu folgender wenig optimalen Abbildung:

| | | |
|---|---|---|
| LD | a | |
| AN | b | |
| A | c | |
| ST | L | 0.0 |
| LD | d | |
| O | e | |
| ST | L | 0.1 |
| LD | L | 0.0 |
| S | f | |
| LD | L | 0.1 |
| R | f | |
| A | f | |
| STN | g | |

Die bisher genannten allgemeinen Regeln führen zu einer effektiven, d. h. semantisch richtigen, aber eventuell ineffizienten Abbildung. Jeder Draht wird auf Operanden abgebildet. Dies führt zu einer teils unnötigen Verwendung temporärer Operanden auf dem Lokaldatenstack.

Wenn ein Ausgang auf genau einen Eingang verdrahtet wird, dann kann man den zu bestimmenden temporären Operanden einsparen, wenn in der Abbildung der Ladebefehl direkt dem Speicherbefehl folgt. Dies gilt sowohl für boolsche als auch für nicht boolsche Verdrahtungen. Ein Draht wird als kurzer Draht bezeichnet, wenn die Verbindungen in der Generierliste direkt aufeinander folgen. Bei einem kurzen Draht kann ein Register des Zielsystems als Operand verwendet werden. Wenn das Zielsystem mehrere Register zur Verfügung hat, so können auch mehrere Verbindungen gleichzeitig als kurz bezeichnet werden. In diesem Sinn ist ein Draht somit kurz, wenn zwischen den Verbindungen in der Generierliste nur Verbindungen eines Drahtes von einem anderen Register sind.

Bei der Abbildbarkeitsprüfung des Steuerungsprogramms des Ausführungsbeispiels gemäß FIG 7 entstand folgende Generierliste: [{AND, OR} , {SR}] . Es wurde erwähnt, dass die Abbildungsreihenfolge für das UND-Gatter (AND) und das ODER-Gatter (OR) beliebig ist. Vertauscht man die beiden Bauteile, so ergibt sich die Abbildungsreihenfolge [{OR, AND} , {SR}] und damit die Generierliste [OR.in1, OR.in2, OR.out, AND.in1, AND.in2, AND.in3, AND.out, SR.operand, SR.in1, SR.in2, SR.q]. In dieser Generierliste folgen AND.out und SR.in1 direkt aufeinander, es gibt somit einen kurzen Draht.

Die Umordnung ist nur erlaubt, wenn es keine implizite Rückkopplung gibt. FIG 6 zeigt ein ungewisses Netzwerk. Wie oben dargelegt, verhält sich die Abbildung aus [a1, a2, o1] anders als die Abbildung [a2, a1, o1] . Wenn es eine implizite Rückkopplung gibt, dann muss die durch den Anwender vorgegeben Reihenfolge beibehalten bleiben, es darf nicht umgeordnet werden.

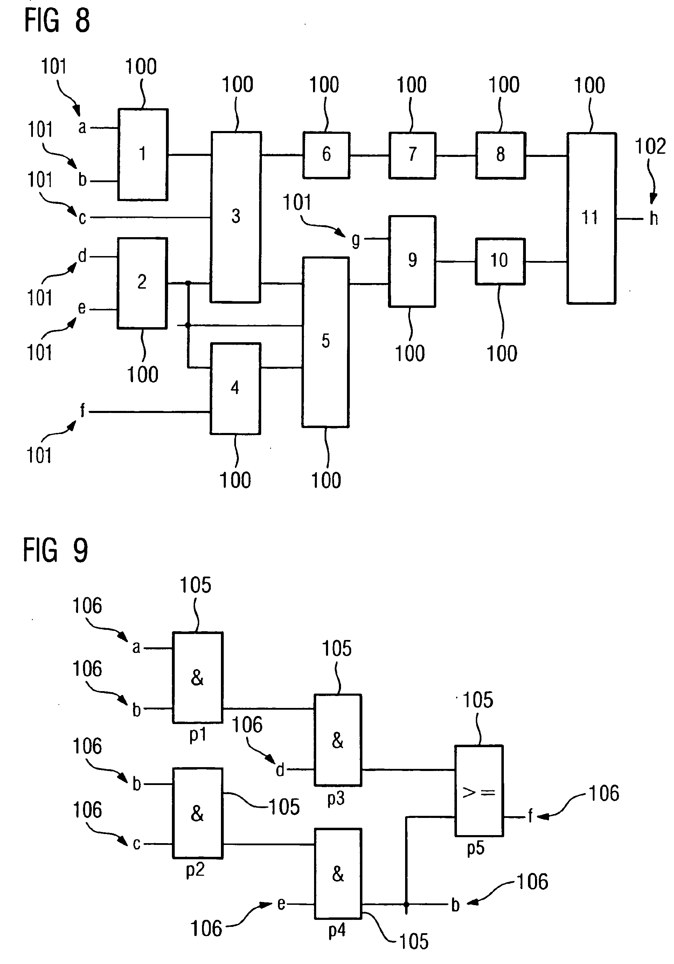

FIG 8 zeigt ein Netzwerk mit nicht näher bezeichneten Bauteilen 100, welche der Einfachheit halber durchnummeriert werden. Die Operanden "a" bis "g" sind Eingänge 101, "h" ist ein Ausgang 102. Daraus folgt, dass das Netzwerk nicht von der Abbildungsreihenfolge abhängig ist, es somit beliebig umgeordnet werden kann. Aus der Abbildbarkeitsprüfung ergibt sich {1, 2} {3, 4} {6, 5} {7, 9} {8, 10} {11} als mögliche Reihenfolge. Dabei entsteht ein einziger kurzer Draht. FIG 8 suggeriert, dass man versuchen sollte [6,7,8] nacheinander abzubilden, da dadurch zwei kurze Drähte entstehen. Um möglichst viele kurze Drähte zu finden, zählt man von wie vielen anderen Bauteilen ein Bauteil abhängig ist. Es ergibt sich die folgende Liste von Mengen:
- nur von Operanden abhängig: {1,2}
- nur von einem Bauteil abhängig: {4,6,7,8,9,10}
- nur von zwei Bauteilen abhängig: {3, 11}
- nur von drei Bauteilen abhängig: {5}

Die Bauteile 1 und 2 sind unabhängig und können jederzeit abgebildet werden. Die Bauteile der zweiten Liste sind Kandidaten für kurze Drähte. Um die kurzen Drähte zu finden, sucht man in dieser Liste nach den Ketten. Dazu bestimmt man von welchem Bauteil ein Bauteil abhängt. Findet man es in dieser Liste, so kann man die beiden verketten. 7 hängt von 6 ab, 8 von 7 und 10 von 9. Dadurch ergeben sich drei Ketten [4] [6,7,8] [9,10]. Als nächstes untersucht man, ob eine Kette von einem unabhängigen Bauteil abhängt. 4 hängt von 2 ab. Daraus ergibt sich die erste abzubildendende Kette: [2,4]. Die beiden Bauteile werden nun aus der Abhängigkeitsliste entfernt. Die Abhängigkeitsliste wird überprüft, weil die bereits abgebildeten Bauteile nun wie Operanden zu werten sind.

Weil 2 abgebildet ist, ist 3 nur noch von 1 abhängig. Weil 2 und 4 abgebildet sind, ist 5 nur noch von 3 abhängig:
- nur von Operanden abhängig: {1}
- nur von einem Bauteil abhängig: {[6, 7, 8], [9, 10], 3, 5}
- nur von zwei Bauteilen abhängig: {11}
   Nun kann man wieder innerhalb der Kandidatenliste nach Ketten suchen. 5 und 6 sind von 3 abhängig. Da ein Bauteil aber nur in einer Kette enthalten sein darf, gibt es hier Spielraum. Es sei die erste Kette in der Liste gewählt. Daraus ergibt sich: {[3, 6, 7, 8], [9, 10], [5]} Als nächstes untersucht man wieder, ob eine Kette von einem unabhängigen Bauteil abhängt. 3 hängt nur von 1 ab, damit ergibt sich als Abbildungsreihenfolge: [2,4,1,3,6,7,8]. Die Bauteile werden aus den Abhängigkeitslisten entfernt. Die Abhängigkeitslisten werden überprüft. 5 ist nun unabhängig, weil 2, 3 und 4 bereits abgebildet sind. Und 11 ist nur noch von 10 abhängig.
- nur von Operanden abhängig: {5}
- nur von einem Bauteil abhängig: {[9,10],11}

Da 10 bereits in einer Kette ist, ergibt sich die Kette [9, 10, 11], die nur von 5 abhängig ist. Damit hat man die Abbildungsreihenfolge [2,4,1,3,6,7,8,5,9,10,11] gewonnen, die mindestens vier kurze Drähte enthält:
(1,3),(6,7),(7,8),(9,10). Ob andere Drähte kurz sind hängt von den konkreten Bauteilen ab.

Wie dargelegt wurde, ist ein Netzwerk ungewiss, wenn ein Operand mehrfach verwendet wird, wobei mindestens ein schreibender Zugriff stattfindet. Die Semantik des Netzwerkes ist in einem solchen Fall nicht eindeutig. FIG 6 zeigt ein Netzwerk, bei dem der Operand "b" mehrfach verwendet wird. "b" muss ein globaler, ein statischer oder ein Einausgangs-Operand sein.

FIG 9 zeigt ebenfalls ein ungewisses Netzwerk mit Bauteilen 105 und Operanden 106. Die Bauteile 105 und die Operanden 106 weisen jeweils einen Namen (p1 - p5 bzw. "a" bis "f") auf, der im Folgenden verwendet wird. Durch die Abbildbarkeitsprüfung erhält man [{p1, p2} , {p3, p4} , {p5}] . Diese Reihenfolge hätte jedoch keinen kurzen Draht. Für die Ergebnisse von p1, p2 und p3 müsste man jeweils einen temporären lokalen Operanden verwenden. Der Draht der p4 mit p5 verbindet ist an "b" angeschlossen, d. h. man kann "b" verwenden und benötigt keinen temporären lokalen Operanden. Das heißt aber auch, dass p5 nur von p3 abhängig ist. Durch das beschriebene Umordnungsverfahren erhält man [p2, p4, p1, p3, p5] . Diese Reihenfolge benötigt keinen temporären lokalen Operanden. Aber diese Reihenfolge liefert ein anderes Ergebnis als [p1, p3, p2, p4, p5], weil "b" durch p4 verändert wird, bevor es von p1 verwendet wird. Und wie oben gezeigt, kann das bei entsprechender anfänglicher Belegung der Operanden zu einem anderen Wert für "e" führen. Die Reihenfolge, in der die "b" verwendenden Funktionen ausgeführt werden, ist für das Ergebnis relevant. Der beschriebene Algorithmus wird deshalb verfeinert. Bevor die Abhängigkeitsmengen ermittelt werden, wird nach Rückkopplungen gesucht. Dazu wird jede Verbindung jedes Draht überprüft. Wird ein Operand gefunden, so merkt man sich, ob dieser gelesen oder geschrieben wird. Es entsteht die Menge der Zugriffe:
{a{p1}{},b{p1,p2,p5}{p4},c{p2}{},d{p3}{},e{p4}{},f{}{p5}}

Es fällt auf, dass "b" von p1, p2 und p5 gelesen und von p4 geschrieben wird. Wenn ein Operand mehrfach beschrieben, oder sowohl geschrieben als auch gelesen wird, so wird durch diesen Operanden eine Reihenfolgenabhängigkeit erzwungen. Das Netzwerk ist in diesem Fall ungewiss. Durch die Datenhaltung ist eine Reihenfolge vorgegeben. Wenn ein Netzwerk ungewiss ist, dann wird Reihenfolge in der die Bauteile aufgeführt werden, für die Bauteile nicht verändert, welche einen Operanden gemeinsam verwenden. Innerhalb eines Netzwerks kann es mehrere Reihenfolgenabhängigkeiten geben, da sich die Reihenfolgenabhängigkeit auf einen Operanden bezieht.

Sei im Beispiel [p1, p2 , p3 , p4 , p5] die in der Datenhaltung verwendete Reihenfolge. Durch b ergibt sich, dass die Reihenfolge [p1, p2, p4, p5], erhalten bleiben muss. p3 könnte sowohl nach p1 als auch nach p2 oder p4 abgebildet werden.

Zu Beginn ergeben sich folgende Listen:
- Abbildbarkeitsprüfung: [{p1, p2} , {p3 ,p4} , {p5}]
- Reihenfolgenabhängigkeit: [p1, p2, p4, p5]
- nur von Operanden abhängig: {p1, p2}
- nur von einem Bauteil abhängig: {p3,p4,p5}

Reihenfolgenabhängige Bauteile dürfen nicht weiterverkettet werden. Somit kann nur die Kette [p1, p3] entstehen. p2 bildet eine Kette für sich. Aus der Menge der Ketten wird die ausgewählt, welche mit dem frühesten Bauteil aus der Reihenfolgenabhängigkeit beginnt: [p1, p3] .

Dadurch ändern sich die Abhängigkeiten:
- nur von Operanden abhängig: {p2, p5}
- nur von einem Bauteil abhängig: {p4}

Da alle Bauteile in der Reihenfolgenabhängigkeit sind, stellt jedes für sich eine Kette dar. p2 ist das früheste aus der Reihenfolgenabhängigkeit und wird als nächstes abgebildet. Dadurch ändern sich die Abhängigkeiten:
- nur von Operanden abhängig: {p4, p5}

Das Ganze wiederholt sich nun für p4 und schließlich für p5. Womit sich als Abbildungsreihenfolge [p1, p3, p2, p4, p5] ergibt.

Bei der Abbildung werden immer nur die Bauteile berücksichtigt, die nicht von anderen Bauteilen abhängig sind. Die durch die Verdrahtung gegebenen Abhängigkeiten haben somit Vorrang vor der durch die Datenhaltung gegebenen Reihenfolge. Sei [p5, p4, p3, p2, p1] die in der Datenhaltung verwendete Reihenfolge. Die Abhängigkeiten sehen zu Beginn wie oben aus. Es lassen sich zwei Ketten bilden: [p1, p3] und [p2].

Da nun p2 vor p1 in der Reihenfolgenabhängigkeit steht wird als erstes p2 abgebildet. Dadurch ändern sich die Abhängigkeiten:
- nur von Operanden abhängig: {p1, p4}
- nur von einem Bauteil abhängig: {p3, p5}

Es lassen sich die Ketten [p1, p3] und [p4] bilden. Da nun p4 vor p1 in der Reihenfolgenabhängigkeit steht, wird p4 zuerst abgebildet. Dadurch ändern sich die Abhängigkeiten:
- nur von Operanden abhängig: {p1}
- nur von einem Bauteil abhängig: {p3, p5}

Es bleibt nur die Kette [p1, p3], da p5 wegen der Reihenfolgenabhängigkeit nicht weiterverkettet werden darf. Durch die Abbildung von [p1, p3] bleibt schließlich p5 als unabhängiges Bauteil und kann abgebildet werden. Womit sich die sinnvolle Abbildungsreihenfolge [p2 , p4, p1, p3 , p5] ergibt, obwohl die Reihenfolge in der Datenhaltung unsinnig war.

Die Generierliste entsteht aus der Abbildbarkeitsprüfung. Die Anschlüsse eines Bauteils bleiben zusammen. Mit allen bisher gefundenen Regeln ergibt sich jedoch noch nicht die bei der Beschreibung zu FIG 2 und FIG 3 angegebene Anweisungsliste. Dazu müsste man aus [{AND, OR} , SR] die Generierliste [AND. in1, AND.in2, AND.in3, SR.s, OR. in1, OR.in2, SR.r] machen. Es ist nötig SR.s und SR.r zu trennen, also das Flipflop nicht in einem Schritt abzubilden. Das so genannte Splitting ist nur für Bauteile möglich und nötig, welche einen Operanden mehrfach verwenden (z. B.: Timer, Counter, Flipflop). Splitting ist nur erlaubt, wenn die Subnetze der Anschlüsse keine Rückkopplungen enthalten und kein schreibender Zugriff innerhalb des gesamten Netzwerkes einen Einfluss auf den Operanden des zu trennenden Bauteils hat.

Bauteile mit speichernden Funktionen (Timer, Counter, Flipflop) benötigen immer einen Operanden. Der Q-Ausgang entspricht diesem Operand. Wenn der Q-Ausgang nicht negiert wird, so kann der daran angeschlossene Draht durch diesen Operanden dargestellt werden.

Die logischen Funktionen (AND, OR, XOR) und manche andere Bauteile (ADD, MUL) sind kommutativ. Das kann einen kurzen Draht ergeben, wie folgendes Beispiel zeigt:

| d : = a and (b or c) | d : = (b or c) and a |
|---|---|
| ld b | ld b |
| or c | or c |
| st locop | and a |
| ld a | st d |
| and locop | |
| st d | |

Kommutativität darf nur verwendet werden, wenn keine Rückkopplungen enthalten sind. Andernfalls könnte ein schreibender Zugriff auf einen Operanden zu einer Verfälschung der Semantik führen.

Hat man einen Draht mit mindestens drei Verbindungen, so entsteht dabei leider oft die Sequenz "st locop ld locop". Das Zwischenergebnis muss ohne Frage gespeichert werden, denn es wird später nochmals gebraucht. Trotzdem könnte man sich das erneute Laden sparen, weil das Zwischenergebnis weiterhin in einem Prozessorregister vorhanden sein sollte. Dazu muss man bei der Abbildung überprüfen, ob der angeschlossene Draht im Befehl vorher bestimmt wurde. Dieser Schritt kann auch nachgeschaltet werden, d. h. erst nachdem abgebildet wurde.

Das beschriebene Verfahren ermöglicht somit die Abbildung beliebig verdrahteter Netzwerke in graphischer Programmiersprache (z. B. KOP, FBS). Erstes Kernstück des Verfahrens ist die Abbildbarkeitsprüfung. Sie liefert, falls das Netzwerk abbildbar ist, eine Abbildungsreihenfolge für die Bauteile. Zweites Kernstück ist das Umordnen. Dabei entsteht eine effiziente Abbildung, die bisher bekannten Verfahren überlegen ist. Bei diesem Verfahren muss/darf/kann der Anwender nur in seltenen Fällen die Abbildungsreihenfolge angeben. Dies ist ein wesentliches Unterscheidungsmerkmal zu den bekannten Verfahren. So wird bisher bei geführten KOP/FBS-Editoren durch die Reihenfolge der Eingabe und die eingeschränkten Eingabemöglichkeiten verhindert, dass ungewisse Netzwerke entstehen. Bei bekannten freien FBS-Editoren wird die Sequenznummer bei der Eingabe durch das System vergeben. Diese Sequenznummer entspricht der Abbildungsreihenfolge. Nur wenige bekannte Systeme erlauben die Änderung der Sequenznummer. Gibt der Anwender in diesen Systemen Fehler ein, so wird entweder dieser Fehler abgebildet oder es wird eine Fehlermeldung erzeugt. In keinem Fall korrigiert das System die Sequenznummer. Bei einem System, das nach dem vorliegenden Verfahren arbeitet, kann der Anwender Sequenznummern eingeben. Er muss das aber nur, wenn das Netzwerk ungewiss ist. Gibt er bei einem ungewissen Netzwerk keine Sequenznummer ein, so wird nur für wenige entscheidende Bauteile eine Sequenznummer nachgefragt. Nach der Abbildung werden diese Sequenznummern durch das System neu vergeben worden sein.

Zusammengefasst betrifft die Erfindung somit ein Verfahren sowie ein System zur Abbildung von Elementen 1 eines in graphischer Programmiersprache vorliegenden Steuerungsprogramms 2 in eine Abbildungsreihenfolge 3, 4, wobei das Steuerungsprogramm 2 mindestens ein Netzwerk 5 aufweist, welches Elemente 1 aufweist, welche über Schnittstellen 6 miteinander und/oder mit Operanden 7 verbunden sind. Für eine effizientere Abbildung wird vorgeschlagen, dass das Verfahren je Netzwerk 5 eine Abbildbarkeitsprüfung sowie ein Umordnungsverfahren aufweist, wobei die Abbildbarkeitsprüfung für ein abbildbares Netzwerk 5 durch einen Flutungsalgorithmus eine erste Abbildungsreihenfolge 3 für die Elemente 1 liefert und wobei das Umordnungsverfahren eine zweite optimierte Abbildungsreihenfolge 4 liefert.

## Patentansprüche

1. Verfahren zur Abbildung von Elementen (1) eines in graphischer Programmiersprache vorliegenden Steuerungsprogramms (2) in eine Abbildungsreihenfolge, wobei das Steuerungsprogramm (2) mindestens ein Netzwerk (5) aufweist, welches Elemente (1) aufweist, wobei die Elemente (1) über Schnittstellen (6) miteinander und/oder mit Operanden (7) über Drähte (71, 92, 94, 96) verbunden sind, wobei das Verfahren je Netzwerk (5) eine Abbildbarkeitsprüfung sowie ein Umordnungsverfahren durchführt, wobei die Abbildbarkeitsprüfung für ein abbildbares Netzwerk (5) durch einen Flutungsalgorithmus bei dem die Elemente (1) und Drähte (71, 92, 94, 96) in einem iterativen Prozess als bestimmt und/oder abbildbar markiert werden eine erste Abbildungsreihenfolge (3) für die Elemente (1) liefert, und wobei das Umordnungsverfahren eine zweite optimierte Abbildungsreihenfolge (4) liefert, indem beim Umordnungsverfahren in einem ersten Schritt eine Liste von Mengen erstellt wird
• mit einer ersten Menge, welche nur von Operanden (7) abhängige Elemente (1) enthält,
• mit einer zweiten Menge, welche von genau einem Element (1) abhängige Elemente (1) enthält,
• mit weiteren Mengen, welche von mehr als einem Element (1) abhängige Elemente (1) enthalten,
und in einem zweiten Schritt Elemente (1) der zweiten Menge, welche voneinander abhängig sind, als Kette verkettet werden und von einem Element (1) der ersten Menge abhängende Ketten und Elemente (1) der zweiten Menge mit diesem Element (1) der ersten Menge verkettet als abgebildete Elemente (1) aus der Liste entfernt werden und für folgende Schritte wie Operanden (7) gewertet werden, wobei der erste und der zweite Schritt solange wiederholt werden, bis alle Mengen leere Mengen sind, wobei die abgebildeten verketteten Elemente (1) die zweite Abbildungsreihenfolge (4) bilden.

2. Verfahren nach Anspruch 1,
**dadurch gekennzeichnet,**
**dass** bei nicht abbildbaren Netzwerken (5) eine Rückmeldung an einen Anwender erfolgt.

3. Verfahren nach einem der vorhergehenden Ansprüche,
**dadurch gekennzeichnet,**
**dass** die Abbildbarkeitsprüfung prüft, ob Elemente (1) und Operanden (7) abbildbar und bestimmt sind.

4. Verfahren nach einem der vorhergehenden Ansprüche,
**dadurch gekennzeichnet,**
**dass** die Abbildbarkeitsprüfung prüft, ob kompatible Schnittstellen (6) bzw. Operanden (7) miteinander verbunden sind.

5. Verfahren nach einem der vorhergehenden Ansprüche,
**dadurch gekennzeichnet,**
**dass** die Abbildbarkeitsprüfung prüft, ob ein Netzwerk (5) ungewiss ist.

6. Verfahren nach einem der vorhergehenden Ansprüche,
**dadurch gekennzeichnet,**
**dass** bei einem ungewissen Netzwerk (5) im Umordnungsverfahren die Reihenfolge der Elemente (1), welche einen Operanden (7) gemeinsam verwenden, in der Abbildungsreihenfolge (3, 4) nicht verändert wird.

7. Verfahren nach einem der vorhergehenden Ansprüche,
**dadurch gekennzeichnet,**
**dass** Elemente (1), welche einen Operanden (7) mehrfach verwenden, in mehreren Schritten abgebildet werden.

8. Verfahren nach einem der vorhergehenden Ansprüche,
**dadurch gekennzeichnet,**
**dass** bei einem ungewissen Netzwerk (5) die Abbildungsreihenfolge (3, 4) zumindest teilweise durch einen Anwender vorgebbar ist.

9. Verfahren nach einem der vorhergehenden Ansprüche,
**dadurch gekennzeichnet,**
**dass** die Elemente (1) gemäß der zweiten Abbildungsreihenfolge (4) in maschinennahe Befehle (12) abgebildet werden.

10. System zur Abbildung von Elementen (1) eines in graphischer Programmiersprache vorliegenden Steuerungsprogramms (2) in eine Abbildungsreihenfolge mittels eines Verfahrens nach einem der Ansprüche 1 bis 9,
wobei das Steuerungsprogramm (2) mindestens ein Netzwerk (5) aufweist, welches Elemente (1) aufweist, welche über Schnittstellen (6) miteinander und/oder mit Operanden (7) verbunden sind,
wobei das System erste Mittel (8) zur Abbildbarkeitsprüfung sowie zweite Mittel (9) zur Umordnung aufweist,
wobei in den ersten Mitteln (8) ein Flutungsalgorithmus zur Generierung einer ersten Abbildungsreihenfolge (3) für die Elemente (1) zum Ablauf gelangt, bei dem die Elemente (1) und Drähte (71, 92, 94, 96) in einem iterativen Prozess als bestimmt und/oder abbildbar markiert werden, und
wobei die zweiten Mittel (9) zur Generierung einer zweiten optimierten Abbildungsreihenfolge (4) vorgesehen sind.

## Claims

1. Method for mapping elements (1) of a control program (2) present in graphical programming language in a mapping sequence, with the control program (2) having at least one network (5), which has elements (1), with the elements (1) being connected to one another via interfaces (6) and/or to operands (7) via wires (71, 92, 94, 96), with the method implementing a mappability test as well as a reassignment method for each network (5), with the mappability test for a mappable network (5) providing a first mappability sequence (3) for the elements (1) by means of a flooding algorithm in which the elements (1) and wires (71, 92, 94, 96) are marked in an iterative process as determined and/or mappable and with the reassignment method providing a second optimised mapping sequence (4), by a list of quantities being created with the reassignment method in a first step,
• with a first quantity, which contains only elements (1) dependent on operands (7),
• with a second quantity, which contains elements (1) dependent on precisely one element (1),
• with further quantities, which contain elements (1) dependent on more than one element (1),
and in a second step, elements (1) of the second quantity, which are dependent on each other, are interlinked as a chain and chains and elements (1) of the second quantity which are dependent on an element (1) of the first quantity are interlinked with this element (1) of the first quantity as mapped elements (1) and removed from the list and evaluated like operands (7) for subsequent steps, with the first and second step being repeated until all quantities are empty quantities, with the mapped interlinked elements (1) forming the second mapping sequence (4).

2. Method according to claim 1, **characterised in that** in the case of non-mappable networks (5), an acknowledgment to a user takes place.

3. Method according to one of the preceding claims, **characterised in that** the mappability test checks whether elements (1) and operands (7) can be mapped and are determined.

4. Method according to one of the preceding claims, **characterised in that** the mappability test checks whether compatible interfaces (6) and/or operands (7) are connected to one another.

5. Method according to one of the preceding claims, **characterised in that** the mappability test checks whether a network (5) is insecure.

6. Method according to one of the preceding claims, **characterised in that** in the case of an insecure network (5) in the reassignment method, the sequence of elements (1), which mutually use an operand (7), is not changed in the mapping sequence (3, 4).

7. Method according to one of the preceding claims, **characterised in that** elements (1), which repeatedly use an operand (7), are mapped in several steps.

8. Method according to one of the preceding claims, **characterised in that** in the case of an insecure network (5), the mapping sequence (3, 4) can be predetermined at least partially by a user.

9. Method according to one of the preceding claims, **characterised in that** the elements (1) are mapped in machine-oriented commands (12) in accordance with the second mapping sequence (4).

10. System for mapping elements (1) of a control program (2) present in graphical programming language in a mapping sequence using a method according to one of claims 1 to 9, with the control program (2) having at least one network (5), which has elements (1), which are connected to one another and/or to operands (7) by way of interfaces (6), with the system having first means (8) for testing the mappability as well as second means (9) for reassignment,
with a flooding algorithm for generating a first mapping sequence (3) for the elements (1) being processed in the first means (8), in which the elements (1) and wires (71, 92, 94, 96) are marked in an iterative process as determined and/or mappable and with the second means (9) for generating a second optimised mapping sequence (4) being provided.

## Revendications

1. Procédé pour la représentation d'éléments (1) d'un programme de commande (2) présent dans un langage de programmation graphique dans un ordre de succession de représentation, le programme de commande (2) présentant au moins un réseau (5) qui présente des éléments (1), les éléments (1) étant reliés par des interfaces (6) les uns aux autres et/ou à des opérandes (7) au moyen de fils (71, 92, 94, 96), le procédé effectuant par réseau (5) un test de représentabilité et un procédé de réarrangement, le test de représentabilité fournissant pour un réseau (5) représentable par un algorithme d'inondation, dans lequel les éléments (1) et fils (71, 92, 94, 96) sont repérés comme définis et/ou représentables dans un processus itératif, un premier ordre de succession de représentation (3) pour les éléments (1) et le procédé de réarrangement fournissant un second ordre de succession optimisé de représentation (4) du fait qu'une liste d'ensembles est établie dans le procédé de réarrangement dans une première étape
• avec un premier ensemble qui contient des éléments (1) ne dépendant que d'opérandes (7),
• avec un second ensemble qui contient des éléments (1) dépendants d'exactement un élément (1),
• avec d'autres ensembles qui contiennent des éléments (1) dépendants de plus d'un élément (1),
et dans une seconde étape, des éléments (1) du second ensemble, qui sont dépendants les uns des autres, sont enchaînés sous forme de chaîne et des chaînes et éléments (1), dépendants d'un élément (1) du premier ensemble, du second ensemble, associés à cet élément (1) du premier ensemble sont enlevés de la liste tout en étant enchaînés avec cet élément (1) du premier ensemble en tant qu'éléments (1) représentés et sont considérés comme des opérandes (7) pour les étapes suivantes, la première et la seconde étapes étant répétées jusqu'à ce que tous les ensembles soient des ensembles vides, les éléments (1) enchaînés représentés formant le second ordre de succession de représentation (4).

2. Procédé selon la revendication 1,
**caractérisé en ce que**,
dans le cas de réseaux (5) non représentables, on a un message retour destiné à un utilisateur.

3. Procédé selon l'une quelconque des revendications précédentes,
**caractérisé en ce que**
le test de représentabilité vérifie si des éléments (1) et opérandes (7) sont représentables et définis.

4. Procédé selon l'une quelconque des revendications précédentes,
**caractérisé en ce que**
le test de représentabilité vérifie si des interfaces (6) ou opérandes (7) compatibles sont reliés les uns autres resp. les unes aux autres.

5. Procédé selon l'une quelconque des revendications précédentes,
**caractérisé en ce que**
le test de représentabilité vérifie si un réseau (5) est incertain.

6. Procédé selon l'une quelconque des revendications précédentes,
**caractérisé en ce que**,
dans le cas d'un réseau (5) incertain dans le procédé de réarrangement, l'ordre de succession des éléments (1), qui utilisent conjointement un opérande (7), n'est pas modifié dans l'ordre de succession de représentation (3, 4).

7. Procédé selon l'une quelconque des revendications précédentes,
**caractérisé en ce que** les éléments (1), qui utilisent plusieurs fois un opérande (7), sont représentés dans plusieurs étapes.

8. Procédé selon l'une quelconque des revendications précédentes,
**caractérisé en ce que**,
dans le cas d'un réseau (5) incertain, l'ordre de succession de représentation (3, 4) peut être prédéfini au moins partiellement par un utilisateur.

9. Procédé selon l'une quelconque des revendications précédentes,
**caractérisé en ce que** les éléments (1) sont représentés selon le second ordre de succession de représentation (4) dans des instructions (12) proches de la machine.

10. Système pour la représentation d'éléments (1) d'un programme de commande (2) présent dans un langage de programmation graphique dans un ordre de succession de représentation au moyen d'un procédé selon l'une quelconque des revendications 1 à 9,
le programme de commande (2) présentant au moins un réseau (5) qui présente des éléments (1) qui sont reliés par des interfaces (6) les uns aux autres et/ou à des opérandes (7),
le système présentant des premiers moyens (8) pour le test de représentabilité et des seconds moyens (9) pour le réarrangement,
un algorithme d'inondation pour la génération d'un premier ordre de succession de représentation (3) pour les éléments (1) arrivant pour le déroulement dans les premiers moyens (8), algorithme dans lequel les éléments (1) et fils (71, 92, 94, 96) sont repérés dans un processus itératif comme étant définis et/ou représentables, et
les seconds moyens (9) étant prévus pour la génération d'un second ordre de succession de représentation (4) optimisé.
